# FASCICULE DE BREVET EUROPEEN

(11) **EP 2 493 792 B1**
(45) Date de publication et mention de la délivrance du brevet: **10.07.2013**
(21) Numéro de dépôt: 10782342.9
(22) Date de dépôt: 11.10.2010
(51) Int. Cl.: B65G 47/91, B29C 49/42

(54) **DISPOSITIF DE PREHENSION D'UN RECIPIENT POURVU D'UN COL ET INSTALLATION POURVUE D'UN DISPOSITIF DE TRANSPORT COMPRENANT AU MOINS UN TEL DISPOSITIF DE PREHENSION**
VORRICHTUNG ZUM ERFASSEN EINES BEHÄLTERS MIT EINEM HALS UND EINHEIT MIT EINER TRANSPORTVORRICHTUNG MIT MINDESTENS EINER DERARTIGEN GREIFVORRICHTUNG
DEVICE FOR GRIPPING A CONTAINER HAVING A NECK AND UNIT PROVIDED WITH A TRANSPORT DEVICE COMPRISING AT LEAST ONE SUCH GRIPPING DEVICE

(30) Priorité: 29.10.2009 FR 0957630
(43) Date de publication de la demande: 05.09.2012
(73) Titulaire: Sidel Participations, 76930 Octeville sur Mer (FR)
(72) Inventeur: FEUILLOLEY, Guy, F-76930 Octeville S/mer (FR)
(74) Mandataire: Cabinet Plasseraud
(86) Numéro de dépôt international: PCT/FR2010/052146
(87) Numéro de publication internationale: WO 2011/051589

(56) Documents cités:
- AU-B2- 449 346
- US-A- 3 971 190

## Description

L'invention se rapporte à un dispositif de préhension d'un récipient pourvu d'un col selon le préambule de la revendication 1 et à une installation pourvue d'un dispositif de transport comprenant au moins un tel dispositif de préhension.

L'invention s'applique plus particulièrement aux installations de traitement en ligne pour la fabrication ou le traitement de récipients en matière thermoplastique telle que du PET, dans lesquelles les récipients sont déplacés individuellement les uns à la suite des autres à l'aide d'un dispositif de transport apte à maintenir les récipients par leur col, de manière à laisser leur corps dégagé.

Il devra toutefois être entendu que l'invention pourrait également s'appliquer à d'autres installations où il est nécessaire de déplacer d'un point à un autre un récipient.

Dans la suite de la description, il est entendu par « récipient pourvu d'un col » tout corps creux présentant un col, tel que des préformes à partir desquelles sont réalisés des récipients, par soufflage ou étirage - soufflage, des récipients intermédiaires réalisés par des processus à étapes de soufflage ou étirage - soufflage multiples, des récipients conformés à leur forme définitive ou devant subir un traitement additionnel, et des récipients finaux.

Dans le cas particulier du transport de préformes en vue de leur chauffage préalablement à l'étape de soufflage, il est nécessaire de prévoir un dispositif de transfert permettant de prendre, ou plus précisément de saisir, une préforme par son col (opération généralement connue sous le nom de « vêtissage ») et de la déplacer dans une zone de chauffage (en général dans un four tunnel), dans laquelle son corps doit être chauffé à une température supérieure ou égale à la température de transition vitreuse du matériau dont elle est réalisée, tout en restant à une température inférieure à sa température de cristallisation.

Pour réaliser ce transfert, on prévoit des éléments de transport munis de dispositifs de préhension formés chacun d'un mandrin qui est propre à être engagé à l'intérieur du col de la préforme (opération de vêtissage intérieur) et qui maintient cette dernière par pression contre la face interne du col.

De tels éléments de transport, assurant une opération de vêtissage interne, sont par exemple décrits dans les demandes FR 2 706 876 (SIDEL) et FR 2 903 965 (SI DEL).

Il existe également des éléments de transport assurant une opération de vêtissage externe, suivant laquelle les préformes sont saisies par l'extérieur de leur col. La demande de brevet EP 1 855 868 en décrit un exemple.

Dans le cas particulier du transport des préformes dans un four tunnel tel que précité, il est indispensable que les préformes soient saisies en étant maintenues parfaitement à la verticale pendant toute la durée de chauffage, de sorte que leur corps soit chauffé de façon uniforme.

On a donc cherché à mettre au point des moyens qui permettent de garantir une parfaite stabilité de la préforme au moment de sa préhension par la chaîne de transport.

De tels moyens sont notamment décrits dans la demande de brevet FR 2 794 109 (SIDEL).

On connait encore d'autres modes de réalisation de dispositifs de préhension, tels que ceux décrits, par exemple, dans les documents US 3 971 190 et AU 57 339. Ces deux documents font référence à des dispositifs de préhension qui saisissent des récipients par leur col, en utilisant des moyens d'aspiration.

Le document US 3 971 190 décrit un dispositif de préhension d'un récipient selon le préambule de la revendication 1.

A l'origine de l'invention, on a cherché à mettre au point d'autres moyens de préhension des récipients, qui soient plus souples à mettre en oeuvre, c'est-à-dire qui s'adaptent facilement à différents diamètres ou formes de cols de récipients et qui sont mécaniquement plus simples à réaliser.

Par ailleurs, l'invention vise également à protéger les cols des récipients des rayonnements incidents, notamment lorsque les récipients sont des préformes qui sont convoyées dans des fours tunnel.

3

L'invention permet de pallier les inconvénients des procédés de l'état de la technique précités en permettant une préhension des préformes par des moyens techniques d'aspiration assurant également un protection du col des récipients.

L'invention concerne à cet effet un dispositif de préhension d'un récipient pourvu d'un col selon les caractéristiques de la revendication 1, le col s'étendant entre l'embouchure (ou buvant) et une collerette radiale qui fait saillie, le dispositif de préhension étant propre à supporter le récipient par son col. Selon l'invention, le dispositif de préhension comprend une cloche à dépression aménagée pour coiffer le col, la cloche comprenant un joint annulaire qui est disposé au niveau d'une extrémité libre d'une paroi périphérique de la cloche, lequel joint est apte à coopérer avec la collerette du col et délimite une chambre, lorsque le récipient est en place sur la cloche avec la paroi externe du col et la paroi périphérique de la cloche. Des moyens sont en outre prévus pour créer une dépression dans la chambre afin de maintenir le récipient ou pour réduire la dépression dans la chambre afin de relâcher le récipient.

Ainsi réalisé, le dispositif permet de saisir les préformes par leur col tout en assurant une protection de ce dernier, ce qui permet, de façon avantageuse, d'utiliser le dispositif conforme à l'invention pour convoyer des préformes dont les cols présentent des diamètres ou des formes différentes.

Le dispositif conforme à l'invention est remarquable en ce que la cloche comporte un fond sensiblement plat, apte à coopérer de façon étanche, au moyen d'un joint, avec le buvant dudit col pour former une chambre torique. De cette façon, le récipient est hermétiquement fermé par application du fond de la cloche sur le buvant quand le récipient est saisi par le dispositif.

Ceci permet, d'une part, de gagner du temps pour saisir le récipient. En effet, dans un tel cas, le volume dans lequel il est nécessaire de faire le vide pour saisir le récipient est réduit (seul le volume de la chambre est soumis à un vide, et non plus le volume de la chambre additionné au volume du récipient).

D'autre part, cela permet de maintenir la pression interne du récipient à une valeur telle que, lorsque le récipient est chauffé (par exemple dans le cas des préformes) et que le matériau se ramollit, les parois ne se contactent pas vers l'intérieur du récipient (phénomènes de « shrinkage »).

Dans une version encore plus avantageuse du dispositif selon l'invention, on peut prévoir que la cloche comprenne des moyens complémentaires pour contrôler la pression qui règne dans le récipient. Cela permet notamment de pouvoir insuffler de l'air dans le récipient, ou de s'assurer que le volume interne du récipient reste à la même pression que la pression extérieure du récipient (pression atmosphérique, par exemple).

De préférence, les moyens pour établir une dépression sont aptes à réaliser un vide de 100 à 950 mbar dans la chambre qui entoure le col.

L'invention vise également une installation pourvue d'un dispositif de transport de récipients, remarquable en ce que le dispositif de transport comporte au moins un dispositif de préhension tel que défini ci-dessus.

L'invention sera davantage comprise au regard des exemples de réalisation qui vont maintenant être présentés, en faisant référence aux figures annexées parmi lesquelles :
- la figure 1 montre un dispositif de préhension selon l'invention, représenté schématiquement en coupe,
- la figure 2 montre un dispositif de préhension, selon un mode de réalisation préférentiel, représenté schématiquement en coupe,
- la figure 3 est un agrandissement d'une partie A des dispositifs représentés sur les figures 1 et 2, illustrant une première variante de réalisation du joint annulaire de collerette conforme à l'invention (pour col de récipient destiné au conditionnement de boissons plates), et
- la figure 4 est un agrandissement d'une partie A des dispositifs représentés sur les figures 1 et 2, illustrant une seconde variante de réalisation du joint annulaire de collerette conforme à l'invention (pour col de récipient destiné au conditionnement de boissons carbonatées).

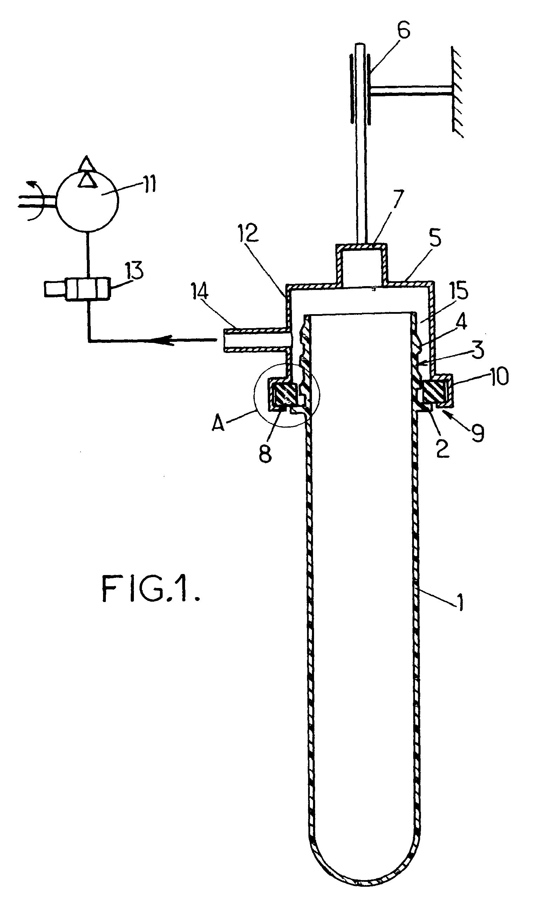

La figure 1 montre un premier dispositif conforme à l'invention, permettant la préhension d'un récipient constitué par une préforme 1, laquelle préforme 1 est destinée à être transformée en bouteille, ou autre flacon, par un procédé de soufflage ou d'étirage - soufflage.

La préforme 1 est réalisée en un matériau thermoplastique connu de l'homme du métier, tel que le PET.

Pour réaliser une bouteille à partir de la préforme 1, cette dernière doit être convoyée de poste en poste dans la chaîne de fabrication.

Ce convoyage se fait usuellement en saisissant la préforme 1 sous ou sur une collerette 2 annulaire qui est réalisée en saillie à la base d'un col 3 que ladite préforme 1 présente.

Ce convoyage peut se faire fait également en saisissant la préforme 1 par l'intérieur en introduisant un mandrin, appelé tournette, par l'extrémité ouverte de la préforme

Le col 3 de la préforme 1 est réalisé par une partie de la paroi de la préforme 1, à l'extrémité ouverte de la préforme. Le col 3 constitue la partie de la bouteille (obtenue à l'issue du procédé de fabrication) sur laquelle vient se fixer, à terme, un bouchon de fermeture.

Le col 3 de la préforme est réalisé au moment de la fabrication de la préforme 1 et il ne subit généralement aucune modification au cours de la fabrication de la bouteille, en particulier durant le procédé de soufflage ou étirage - soufflage de ladite préforme 1.

En vue de la fixation d'un bouchon, le col 3 de la préforme 1 présente généralement une hauteur sensiblement égale à la hauteur du bouchon, ainsi qu'un filetage 4 externe qui coopère avec un filetage interne du bouchon.

Afin que le bouchon se visse correctement sur le col 3 de la bouteille finalement obtenue, il convient que ce col 3 ne soit pas déformé durant le procédé de fabrication de la bouteille à partir de la préforme 1.

Le dispositif illustré sur la figure 1, conforme à l'invention, assure la protection du col 3 de la préforme 1 durant le convoyage de cette dernière, ainsi que la préhension de ladite préforme, permettant son convoyage.

Pour ce faire, le dispositif comporte une cloche 5 dont le diamètre est tel que ladite cloche 5 est apte à coiffer entièrement le col 3, c'est-à-dire à l'envelopper complètement jusqu'à la collerette 2.

La cloche 5 est montée mobile en déplacement vertical par rapport à un dispositif 6 de commande. Ce mode de réalisation permet de placer la cloche 5 autour du col 3 et de la retirer aisément, pendant que la préforme 1 est portée de façon classique, par des moyens non représentés, de guidage sous col.

Pour ce faire, la cloche 5 est reliée au dispositif 6 de commande par son sommet 7.

Conformément à l'invention, la cloche 5 comprend un joint 8 annulaire apte à coopérer avec la collerette 2 qui est saillante par rapport à la paroi du col 3 de la préforme 1.

La cloche 5 présente une extrémité 9 ouverte, et le joint 8 annulaire est fixé sur la paroi interne de cette extrémité 9 ouverte.

La fixation peut être réalisée par tout moyen estimé approprié par l'homme du métier, comme par exemple de la colle, ou des moyens mécaniques de retenue.

Comme le montre la figure 1, l'extrémité 9 libre peut également comporter un logement 10 annulaire apte à loger et à encastrer le joint 8. Ce mode de réalisation contribue à un meilleur maintien du joint 8 dans la cloche 5.

Pour assurer le maintien de la préforme, on prévoit des moyens techniques pour assurer une dépression au voisinage du col 3 de la préforme 1, conformément à l'invention.

Ces moyens techniques sont réalisés par un générateur 11 de vide, relié à une paroi 12 latérale de la cloche 5 par l'intermédiaire d'une électrovanne 13.

Pour ce faire, la paroi 12 latérale comporte une pipe 14 de raccordement.

Ainsi, pour saisir une préforme 1, la cloche 5 est abaissée par le dispositif 6 de commande jusqu'à ce que son extrémité 9 libre coopère avec la collerette 2, de manière à ce que le joint 8 annulaire vienne en appui contre ladite collerette 2.

Le générateur 11, apte à établir une dépression, est alors mis en fonctionnement.

Il s'établit une dépression générale dans la cloche 5 et la préforme 1, c'est-à-dire dans une chambre 15 qui est définie par la paroi du col 3 qui se trouve en regard de la paroi 12 de la cloche 5 et ladite paroi 12, ainsi que dans la préforme 1, de sorte que cette dernière est retenue par succion sous la cloche 5.

Pour libérer la préforme, il suffit alors d'arrêter le fonctionnement du générateur 11 de vide, et de remettre la pression atmosphérique au moyen de l'électrovanne 13. En d'autres termes, pour libérer la préforme, il faut réduire la dépression dans la chambre à une valeur suffisante afin de pouvoir libérer la préforme.

On comprend, de ce mode de réalisation, que la préforme 1, maintenue par son col 3 grâce à la cloche 5, est amenée d'un poste à un autre dans la chaîne de fabrication de telle manière que son col 3 est toujours protégé, car il est recouvert entièrement par la cloche 5.

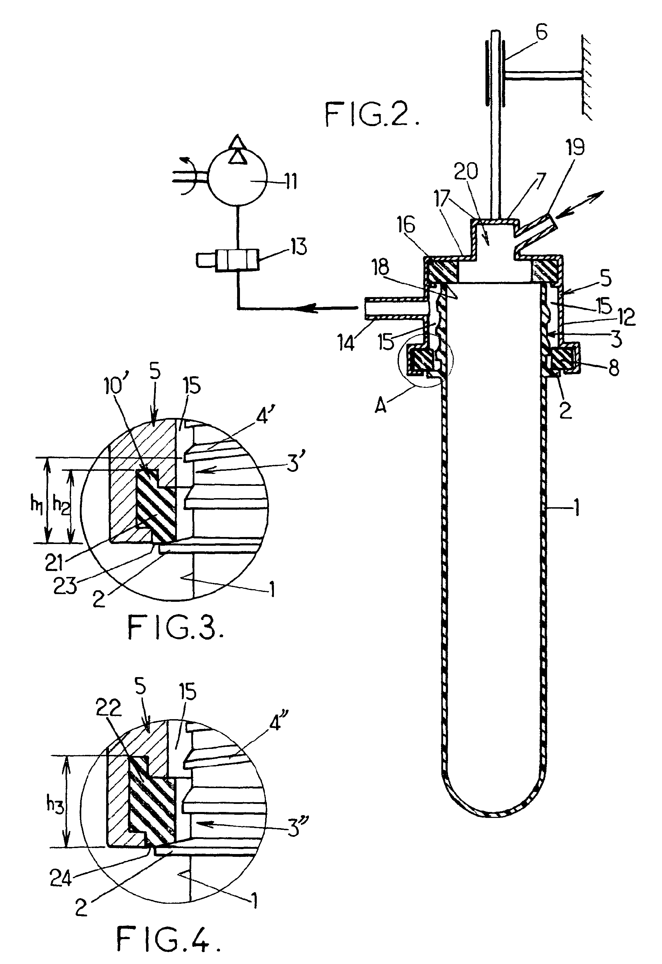

On va maintenant décrire un mode de réalisation préférentiel, en faisant référence à la figure 2.

Ce mode de réalisation permet d'éviter, lors du chauffage de la préforme, tout phénomène de « shrinkage » de la préforme, c'est-à-dire d'éviter la déformation des parois de ladite préforme (contraction) sous l'effet du vide généré dans son volume interne.

La préforme 1 illustrée sur la figure 2 est identique à la préforme illustrée sur la figure 1. Les mêmes références que celles utilisées pour la figure 1 ont donc été reportées.

Concernant la cloche illustrée sur la figure 2, les références ayant trait aux mêmes éléments que ceux de la cloche de la figure 1 ont été maintenues.

La cloche 5 de la figure 2 comporte, en sus de la cloche 5 de la figure 1, un second joint 16 en forme de rondelle plate, apte à être appliqué et maintenu dans un fond 17 plat de la cloche.

Ce second joint 16 est apte à être maintenu contre le buvant 18 du col 3, c'est-à-dire contre le bord de l'extrémité ouverte du col 3.

De cette manière, la chambre 15 est une chambre fermée et le joint 16 interdit toute communication entre la chambre 15 et l'intérieur de la préforme 1.

Cela permet de générer un vide uniquement dans la chambre 15 pour saisir la préforme 1.

Dans le cadre de ce mode de réalisation, le générateur 11 de dépression est apte à générer un vide dans la chambre 15 sensiblement compris entre 100 et 950 mbar.

Pour cette raison, l'intérieur de la préforme ne subit aucun phénomène de « shrinkage » quand la cloche 5 véhicule la préforme d'un poste à un autre.

Cette réalisation montrée sur la figure 2 se distingue encore de la réalisation montrée sur la figure 1 en ce que la chambre 15 de la réalisation de la figure 1 communique avec l'intérieur de la préforme 1.

Le volume interne de la préforme communique avec une partie 20 sommitale de la cloche 5, laquelle partie 20 sommitale est délimitée par les parois du sommet 7.

On prévoit un raccordement 19 de cette partie 20 avec des moyens permettant de contrôler la pression interne de la préforme 1.

Le raccordement peut être réalisé par un tuyau, et les moyens de contrôle peuvent être réalisés par tout dispositif connu et estimé applicable par l'homme du métier.

Ces moyens n'ont volontairement pas été représentés sur la figure 2 de manière à en simplifier la lecture.

De tels moyens peuvent également consister en des moyens assurant uniquement la communication de l'intérieur de la préforme avec l'extérieur, de sorte que la pression intérieure de la préforme 1 soit identique à la pression extérieure à la préforme, ce qui suffit à éviter tout phénomène de « shrinkage ».

Les figures 3 et 4 sont des agrandissements de la partie A montrée sur les figures 1 et 2, et elles illustrent en particulier deux modes de réalisation de joints 8 qui sont propres à s'appliquer chacun sur une collerette 2.

La figure 3 montre un joint 21 qui est apte à venir en contact avec la collerette 2 d'un col 3' réalisé spécifiquement pour un récipient destiné à contenir un liquide plat, sans gaz.

Le joint 21 est réalisé en matériau élastomère tel que le Silicone 30SH ; Viton® 85SH ; EPHDM 85SH.

Il présente une section en forme de S et sa hauteur h2 est sensiblement inférieure à la hauteur h1 prise entre la collerette 2 et l'extrémité basse du filetage 4'.

L'extrémité 9 libre de la cloche 5 comporte un logement 10' de forme complémentaire à la forme du joint 21 pour le maintenir, au moins en partie, de manière mécanique, dans une sorte d'encastrement.

Le joint 21 présente une surface d'extrémité 23 contre laquelle s'appuie la collerette 2 quand la cloche 5 coiffe le col 3'.

De cette façon le joint 21 est maintenu enfoncé dans le logement 10', sans possibilité d'en sortir.

Le col 3', qui est réalisé pour un récipient destiné à contenir un liquide non gazeux, par exemple de l'eau plate, présente au moins un filetage 4' avec un filet continu qui entoure le col une ou plusieurs fois.

La figure 4 montre partiellement un col 3" qui est réalisé pour un récipient destiné à contenir des liquides carbonatés, tels que des boissons gazeuses.

Le col 3" est plus grand que le col 3' de la figure 3, et présente un ou plusieurs filetages 4" qui sont différents du ou des filetages 4'.

Le ou les filetages 4" sont plus longs et/ou présentent des coupures, aptes à venir coopérer avec des coupures réalisées dans le filetage d'un bouchon venant se visser sur le col 3".

De cette manière, quand le bouchon est dévissé, les gaz contenus dans le récipient sont évacués entre les filetages, à travers les coupures, et le bouchon n'est pas projeté sous l'effet des gaz libérés.

Le joint 22 présente une hauteur h3 supérieure à la hauteur h1 du joint 21, et une surface d'extrémité 24 plus importante que la surface d'extrémité 23 du joint 21 pour venir en appui contre la collerette 2.

On comprend de la description qui précède comment l'invention permet de saisir les préformes en protégeant leur col et en évitant les phénomènes de « shrinkage ».

Il devra toutefois être compris que l'invention n'est pas spécifiquement limitée aux modes de réalisation qui viennent d'être décrits et qu'elle s'étend à tout moyen équivalent.

## Revendications

1. Dispositif de préhension d'un récipient (1) pourvu d'un col (3), ledit col (3) comprenant une paroi sur laquelle une collerette (2) radiale qui fait saillie, ledit dispositif de préhension étant propre à supporter ledit récipient (1) par son col (3), le dispositif comprenant une cloche (5) à dépression aménagée pour coiffer ledit col (3), ladite cloche (5) comprenant : un joint (8) annulaire qui est disposé au niveau d'une extrémité (9) libre d'une paroi (12) périphérique de ladite cloche (5), lequel joint (8) est apte à coopérer avec ladite collerette (2) du col (3), et délimite, lorsque le récipient est en place sur ladite cloche (5) avec la paroi externe du col (3) et ladite paroi (12) périphérique de ladite cloche (5), une chambre, des moyens (11) étant prévus pour créer une dépression dans ladite chambre afin de maintenir le récipient ou pour réduire la dépression dans ladite chambre afin de relâcher ledit récipient, **caractérisé en ce que** la cloche (5) comporte un fond sensiblement plat, apte à coopérer de façon étanche, au moyen d'un joint (16), avec le buvant (18) dudit col (3) pour former une chambre torique.

2. Dispositif de préhension selon la revendication 1, **caractérisé en ce que** la cloche (5) comprend des seconds moyens (19) pour contrôler la pression qui règne dans ledit récipient (1).

3. Dispositif de préhension selon l'une quelconque des revendications 1 ou 2, **caractérisé en ce que** les moyens pour établir une dépression sont aptes à réaliser un vide de 100 à 950 mbar dans la chambre (15).

4. Installation pourvue d'un dispositif de transport de récipients, **caractérisée en ce que** ledit dispositif de transport comporte au moins un dispositif de préhension tel que défini selon l'une quelconque des revendications précédentes.

## Patentansprüche

1. Vorrichtung zum Greifen eines Behälters (1), der mit einem Hals (3) versehen ist, umfassend eine Wand, an der ein radialer Kragen (2) vorspringt, wobei die Greifvorrichtung geeignet ist, den Behälter (1) an seinem Hals (3) zu tragen, wobei die Vorrichtung eine Glocke (5) mit Unterdruck umfasst, die derart angeordnet ist, dass sie sich an den Hals (3) anlegt, wobei die Glocke (5) eine Ringdichtung (8) umfasst, die im Bereich eines freien Endes (9) einer umlaufenden Wand (12) der Glocke (5) angeordnet ist, wobei die Dichtung (8) geeignet ist, mit dem Kragen (2) des Halses (3) zusammenzuwirken, und, wenn der Behälter auf der Glocke (5) mit der Außenwand des Halses (3) und der umlaufenden Wand (12) der Glocke (5) angeordnet ist, eine Kammer begrenzt, wobei Mittel (11) vorgesehen sind, um einen Unterdruck in der Kammer zu erzeugen, um den Behälter zu halten oder um den Unterdruck in der Kammer zu verringern, um den Behälter loszulassen, **dadurch gekennzeichnet, dass** die Glocke (5) einen im Wesentlichen flachen Boden umfasst, der geeignet ist, auf dichte Weise mittels einer Dichtung (16) mit dem Ausguss (18) des Halses (3) zusammenzuwirken, um eine ringförmige Kammer zu bilden.

2. Greifvorrichtung nach Anspruch 1, **dadurch gekennzeichnet, dass** die Glocke (5) zweite Mittel (19) umfasst, um den Druck zu kontrollieren, der in dem Behälter (1) herrscht.

3. Greifvorrichtung nach einem der Ansprüche 1 oder 2, **dadurch gekennzeichnet, dass** die Mittel zur Erzeugung eines Unterdrucks geeignet sind, ein Vakuum von 100 bis 950 mbar in der Kammer (15) zu erzeugen.

4. Anlage, die mit einer Vorrichtung zur Beförderung von Behältern versehen ist, **dadurch gekennzeichnet, dass** die Fördervorrichtung mindestens eine Greifvorrichtung, wie nach einem der vorhergehenden Ansprüche definiert, umfasst.

## Claims

1. Device for gripping a receptacle (1) provided with a neck (3), said neck (3) comprising a wall from which a collar (2) extends radially, said gripping device being designed to support said receptacle (1) by its neck (3), the device comprising a vacuum cup (5) disposed so as to sit over said neck (3), said cup (5) comprising: a sealing ring (8) disposed on a level with a free end (9) of a peripheral wall (12) of said cup (5), which sealing ring (8) is designed to co-operate with said collar (2) of the neck (3) and bound a chamber with the external wall of the neck (3) and said peripheral wall (12) of said cup (5) when the receptacle is positioned on said cup (5), means (11) being provided for creating a vacuum in said chamber in order to hold the receptacle or to reduce the vacuum in said chamber in order to release said receptacle, **characterised in that** the cup (5) has a substantially flat base, designed to co-operate with the lip (18) of said neck (3) in a sealing arrangement by means of a seal (16) to form a toroidal chamber.

2. Gripping device as claimed in claim 1, **characterised in that** the cup (5) has second means (19) for controlling the pressure prevailing in said receptacle (1).

3. Gripping device as claimed in any one of claims 1 or 2, **characterised in that** the means for establishing a vacuum are designed to create a vacuum of 100 to 950 mbar in the chamber (15).

4. Plant equipped with a device for conveying receptacles, **characterised in that** said conveyor device has at least one gripping device as defined in any one of the preceding claims.
